# EUROPEAN PATENT APPLICATION

(11) **EP 4 733 214 A1**
(43) Date of publication of application: **29.04.2026**
(21) Application number: 25209815.7
(22) Date of filing: 20.10.2025
(51) Int. Cl.: B65D 19/00

(54) **PALLET FOR CARRYING A LOAD, FORMED FROM EXPANDED POLYSTYRENE, AND METHOD FOR ITS MANUFACTURE**

(30) Priority: 22.10.2024 BE 202405709
(71) Applicant: Isomo N.V., 8501 Kortrijk-Heule (BE)
(72) Inventor: VEREECKE, Thierry, 8500 Kortrijk (BE)
(74) Representative: De Clercq & Partners

(57) **Abstract**

The invention concerns a pallet formed from expanded polystyrene, and a method for its manufacture.

## Description

### TECHNICAL FIELD

The invention relates to the technical field of pallets. In particular, the invention concerns a pallet formed from expanded polystyrene, and a method for its manufacture.

### TECHNOLOGICAL BACKGROUND TO THE INVENTION

Pallets are essential elements in modern logistics and supply chain management, and are used for transport, storage and protection of goods in various sectors from retail to heavy industry. The most common materials for pallets are wood, plastic and metal. Wooden pallets are traditionally most used because of their availability, while plastic pallets are gaining popularity because of their durability. Metal pallets are often used in heavy industries where extra strength is required.

Because of their material, pallets are often expensive. Although plastic and metal pallets are more durable, they are often even more expensive than traditional wooden pallets, which can be an obstacle for small businesses. In addition, in the transport of goods, there are also loads which are considerably lighter. For these less heavy loads, robust pallets such as wooden, plastic or metal pallets are not always necessary, and use of such rigid pallets can lead to unnecessary costs.

In addition, pallets are in any case quite large, which means they take up considerable space both during transport and during storage. This extent can be a challenge, in particular in environments with limited space. When unused pallets are stored, they often require considerable storage capacity, which can impact the costs and efficiency of a store.

In an alternative and cheap transport system, in some stores or storage sites, a pair of bars (e.g. wood or EPS) are glued together. Then the packed goods are attached to these, and often wrapped with packing film. Some disadvantages of this, however, are that the goods are not adequately protected, and relatively a great deal of manual work is required for loading and unloading. In addition, the bars to which packing film still adheres cannot be reused, which contributes to a growing mountain of waste.

There is therefore a need for a pallet which offers a solution to one or more of the above problems. There is also a need for a method for manufacturing such a pallet.

### SUMMARY OF THE INVENTION

The invention and preferred embodiments thereof offer a solution to one or more of the above needs.

In a first aspect, the invention concerns a pallet, for carrying a load, formed from expanded polystyrene. The pallet preferably comprises at least one loading panel with a top loading surface, a bottom surface almost parallel to the top loading surface, and at least two mutually opposite width sides. Each width side comprises a support element which protrudes from the top loading surface downward out of the bottom surface and extends over at least a part of the respective width surface. The bottom surface of a pallet preferably fits perfectly into the top surface.

The inventors have surprisingly discovered that the pallets according to the first aspect, or preferred embodiments thereof, lead to a minimum material loss which occurs during the production process. This increases the efficiency and makes production more sustainable. In addition, these pallets are easily stackable, whereby they take up less space. This is favourable primarily in stores and during transport, where space or storage capacity is often limited.

A pallet formed from expanded polystyrene has the advantage that the pallet is recyclable, and hence promotes sustainability. In addition, these pallets are lighter, which considerably improves the transport efficiency. Because of their reduced weight, they can be relocated and transported more easily, which not only reduces fuel costs but also minimises working effort. Moreover, the pallet reduces the physical load on workers, which lowers the risk of injury.

In addition, the dimensions of the pallets can easily be adapted to the needs of the client without the need for extra investment, such as moulds.

In a preferred embodiment, the pallet, for carrying a load, is formed from expanded polystyrene. The pallet comprises at least one loading panel with a top loading surface, a bottom surface almost parallel to the top surface, and at least two mutually opposite width sides, wherein each width side of the loading panel comprises a support element which protrudes from the top loading surface downward out of the bottom surface, wherein each support element extends over the complete length of the respective width surface of the loading panel, and wherein the support element has at least two sloping walls which meet at a contact surface or contact point.

In a preferred embodiment, the pallet is formed only from expanded polystyrene (EPS).

An advantage of this is that a homogeneous, lightweight and shape-stable pallet is obtained. Moreover, such a pallet can easily be produced in one piece. Because only one material is used, production and assembly processes are simplified, risks of delamination or material stresses are eliminated, and after use the pallet can be completely recycled without separation of components. In addition, EPS is cheap and resistant to moisture, temperature fluctuations and chemical influences, whereby the pallet is suitable for widely varying logistics applications and environments, while the low own weight contributes to lower transport costs and increased user-friendliness.

In a preferred embodiment, the loading panel has two parallel length sides and two parallel width sides, wherein the width sides are preferably longer than the length sides.

In a preferred embodiment, at least one support element, preferably each support element, has at least two sloping walls which meet at a contact surface. Preferably, the sloping walls enclose an angle between 40 and 120 degrees, preferably between 70 and 90 degrees.

In a preferred embodiment, the pallet comprises at least two neighbouring loading panels which are connected to one another at a width side by means of a common support element.

In a preferred embodiment, the support element between two neighbouring loading panels is smaller than the support elements at the ends of the pallet.

In a preferred embodiment, the sloping walls of the common support element between two neighbouring loading panels enclose an angle which is greater than the angle enclosed between sloping walls of the support elements at the ends of the pallet.

In a preferred embodiment, at least one support element, preferably each support element, extends over the complete length of the width side of the loading panel.

In a preferred embodiment, at least one of the outermost width sides of the pallet comprises an upright edge which extends at least over a part of at least one of the outermost width sides of the pallet, preferably over the complete length of at least one of the outermost width sides of the pallet, preferably both outermost width sides.

In a preferred embodiment, the pallet is formed from a solid whole.

In a preferred embodiment, the pallet is made from expanded polystyrene with a density of at least 15 kg/m³.

In a preferred embodiment, each loading panel has a thickness of at least 15mm.

In a second aspect, the invention concerns a method for manufacturing a pallet as described herein. The method preferably comprises at least the following steps:
a) provision of expanded polystyrene, preferably a solid block of expanded polystyrene; and
b) cutting out of one or more pallets as described herein, using a cutting tool.

(Preferred) embodiments of the first aspect of the invention are also (preferred) embodiments of the second aspect of the invention, and vice versa.

The inventors have surprisingly discovered that the method according to the second aspect, or preferred embodiments thereof, makes it possible to easily cut different pallet shapes and formats without requiring extra actions or equipment such as moulds. This promotes the design flexibility and increases the possibilities for customisation. In addition, the number of required cutting movements reduces the complexity of the production process, whereby it becomes less labour-intensive, the chance of errors is reduced and production is quicker.

An advantage of the method, or preferred embodiments thereof, is that less or even no cutting waste occurs between two successively cut pallets, wherein when cutting a block of EPS, several products are obtained. After cutting a block of EPS according to the method, stacks of pallets are obtained which lie snugly on one another with a minimum amount of cutting waste on the top and bottom sides of the block of EPS.

This stack can be directly used by machine or prepared for transport with minimum effort, which considerably increases the efficiency of the production and distribution process.

In a preferred embodiment, step b) is carried out by means of at least two glow wires which are parallel to one another.

In a preferred embodiment, step b) is carried out by moving the at least two glow wires in the length direction through the expanded polystyrene.

In a preferred embodiment, the method furthermore comprises
c) cutting of the length sides to the desired width of the one or more pallets; and/or
d) cutting of the width sides to the desired length of the one or more pallets.

### DESCRIPTION OF THE FIGURES

In order to demonstrate the features of the invention better, the appended figures show, with no restrictive character, some examples of possible and preferred embodiments of the present invention. In the figures, the same numbers indicate the same or similar elements. The numerical references are discussed in more detail in the examples.
**FIG.** 1 illustrates a perspective depiction of a pallet according to the invention.
**FIG.** 2 illustrates a cross-section of a pallet according to an embodiment of the invention.
**FIG. 3** illustrates a cross-section of a pallet according to an embodiment of the invention.
**FIG. 4** illustrates an alternative embodiment of a cross-section of a pallet according to an embodiment of the invention.
**FIG. 5** illustrates an alternative embodiment of a cross-section of a pallet according to an embodiment of the invention.
**FIG. 6** illustrates an alternative embodiment of a cross-section of a pallet according to an embodiment of the invention.
**FIG. 7** illustrates some preferred dimensions and angles of a cross-section of two pallets according to an embodiment of the invention.
**FIG.** 8 illustrates a cross-section of stacked pallets according to an embodiment of the invention.

### DETAILED DESCRIPTION

As used below in this text, the singular forms "a " and "the" comprise both the singular and the plural unless the context clearly indicates otherwise.

The terms "comprise", "comprises" as used below are synonymous with "inclusive", "include", "contain" or "contains", and are inclusive or open-ended and do not exclude additional unnamed parts, elements or method steps. The terms "comprise", "comprises" include the term "composed of".

The listing of numerical values using a range of digits comprises all values and fractions which fall within these ranges, including the specified endpoints.

All documents cited in the present specification are hereby included by reference in full.

Unless defined otherwise, all terms used relating to the invention, including technical and scientific terms, have the meaning usually understood by a skilled person. As a further guidance, definitions are included for further explanation of terms used in the description of the invention. The terminology used herein is accordingly not intended to be restrictive.

In the following passages, various aspects of the invention are defined in more detail. Preferred features and embodiments of the tool according to the invention are explained below. Each feature or embodiment of the invention so defined may be combined with any other feature or embodiment unless explicitly stated to the contrary. In particular, any feature which is indicated as advantageous or preferred may be combined with any other feature or features or embodiments which are described as advantageous or preferred.

In particular, a feature indicated as "preferred" or "advantageous" may be combined with other features or properties which are described as "preferred" and/or "advantageous". Reference in this description to "one embodiment" or "an embodiment" means that a specific feature, structure or property described in conjunction with the embodiment is present in at least one embodiment of the present invention. When the phrases "in one embodiment" or "in an embodiment" are used at various points in this specification, they do not necessarily refer to the same embodiment, but this is not excluded. Furthermore, the described features, structures or properties may be combined in any suitable fashion, as will be clear to the skilled person from this description. The embodiments described and claimed in the claims may be used in any combination.

In the present description of the invention, reference is made to the appended drawings which form part thereof and which illustrate certain specific embodiments of the invention. Numbers linked to specific elements illustrate the elements concerned as examples, without thereby restricting the elements concerned. It must be understood that structural or logical changes may be made without leaving the scope of the present invention.

The invention comprises in a first aspect a pallet 1 suitable for carrying a load. The formed pallet is made of expanded polystyrene. The pallet 1 comprises two outermost length sides 2a and 2b and two outermost width sides 3a and 3b. The pallet 1 preferably comprises at least one loading panel 4 with a top loading surface 5, a bottom surface 6 almost parallel to the top surface 5, and at least two mutually opposite width sides 7a and 7b. Preferably, the pallet also comprises two mutually opposite length sides 2a and 2b. Furthermore, the pallet 1 preferably comprises, on at least two mutually opposite width sides 7a and 7b of the loading panel 4, a support element 8 which protrudes from the top loading surface 5 downward out of the bottom surface 6. The support element 8 extends over at least a part of the respective width side 7a and 7b of the loading panel 4. Thus the pallet 1 comprises at least two support elements 8, at least one support element 8 on each width side of the pallet 1. If the pallet 1 comprises several loading panels 4, preferably precisely two loading panels, then the pallet 1 comprises more than two support elements 8, preferably precisely three support elements 8.

The term "pallet" means a load carrier or transport element which is suitable for carrying a load.

The term "expanded polystyrene" also comprises the terms "EPS" or "Styrofoam".

The term "support element" means a component intended to support the pallet when placed for example on the ground. The term "support element" also comprises the terms "supporting element", "carrier element", "foot", "carrier" or "lifting element". Because of the use of support elements, the entire pallet does not lie on the ground and will be less affected by moisture. In addition, the use of support elements ensures an open space below the bottom surface, under which a conventional manual pallet trolley or forklift can be placed. In this way, the loaded or unloaded pallets can easily be relocated. Preferably, the support elements are provided at a distance apart so that the open space is suitable for use with a conventional manual pallet trolley or forklift. Preferably, the pallet 1 comprises precisely two loading panels 4 and precisely three support elements 8, preferably configured to be transported with a conventional manual pallet trolley or forklift.

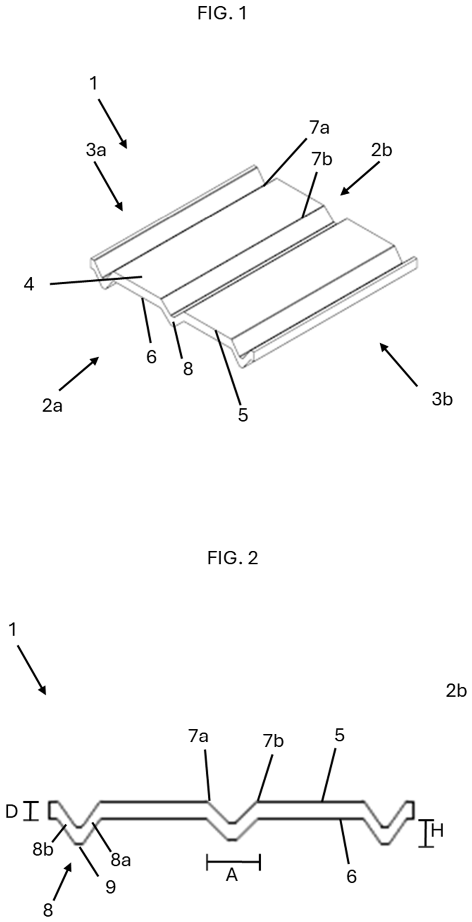

An example of such a pallet according to an embodiment of the invention is shown in **figure 1. Figure 1** illustrates a pallet 1 comprising two parallel length sides 2a and 2b and two outermost parallel width sides 3a and 3b. The length of the length sides and of the width sides of the pallet may comprise different dimensions. Thus the length sides may be equal to the width sides, or the length sides may be longer than the width sides of the pallet. The length of the length sides of the pallet may vary. Typically, the length of the length sides of the pallet is between 500 mm and 6000 mm. The length of the width sides of the pallet may also vary. Typically, the length of the width sides of the pallet is between 500 mm and 1500 mm. Preferably, the length of the width sides of the pallet is at least 17 cm. The pallet is preferably square or rectangular. In a preferred embodiment, the pallet is made of a whole. An advantage of this is that such a pallet can easily be produced, which can lead to faster production processes and lower costs in the supply chain.

In some embodiments, the loading panel comprises two parallel length sides and two parallel width sides, wherein the width sides are preferably longer than the length sides. In some embodiments, the pallet comprises two or more loading panels which are separated from one another at a width side, as shown in **figure 1****.** Neighbouring loading panels 4 are preferably separated from one another at a width side 7a and 7b by a common support element 8. The width sides 7a and 7b between neighbouring loading panels 4 are preferably at a distance from one another. The distance A between the width sides of the neighbouring loading panels preferably corresponds to the width of the support element between the width sides of neighbouring panels, as shown in **figure 2****.** This distance A preferably amounts to at least 150 mm, at least 155 mm, at least 160 mm, at least 165 mm, at least 170 mm, or at least 175 mm. An advantage of these dimensions is that the support elements are sufficiently large to carry the load, while the length sides of the loading panels are still long enough to support the load and make it easy to position the forks of a transport pallet on the loading panels.

The thickness D of each loading panel 4 may vary and is dependent on the weight of the load. The heavier the load, preferably the greater the thickness of the loading panel. In some embodiments, the loading panel has a thickness of at least 15 mm, at least 20 mm, at least 25 mm, at least 26 mm, at least 27 mm, at least 28 mm, at least 29 mm, at least 30 mm, at least 35 mm, at least 40 mm, of at least 45 mm. In some embodiments, the loading panel has a thickness of between 15 mm and 80 mm, between 16 mm and 75 mm, between 17 mm and 70 mm, between 18 mm and 65 mm, between 19 mm and 60 mm, between 20 mm and 55 mm, between 21 mm and 54 mm, between 22 mm and 53 mm, between 23 mm and 52 mm, between 24 mm and 51 mm, or between 25 mm and 50 mm. In the case that the pallet comprises two or more loading panels, the loading panels of the same pallet preferably have the same thickness, as shown in **figure 2****.**

In some embodiments, the support element 8 or support elements of the pallet 1 comprise(s) at least two sloping walls 8a and 8b which meet at a contact point 9 (or contact surface) which is intended to rest on the substrate. An example of this is shown in **figure 2****.** Preferably, the support elements are V-shaped (or U-shaped). The sloping walls 8a and 8b of the support elements 8 preferably enclose an angle between 40 and 120 degrees, between 45 and 115 degrees, between 50 and 110 degrees, between 55 and 105 degrees, between 60 and 100 degrees, between 65 and 95 degrees, or preferably between 70 and 90 degrees. The sloping walls of different support elements may enclose a same angle. However, it is also possible that the sloping walls of different support elements each enclose another angle. Preferably, the enclosed angle of the sloping walls of the support elements on the width sides of the pallet is the same, preferably the enclosed angle is between 70 and 90 degrees. In the case that the pallet comprises two or more loading panels, the sloping walls of the common support element located between width sides of neighbouring loading panels have an enclosed angle which does not correspond to the enclosed angle of the sloping walls of the support elements on the outermost width sides of the pallet. In some embodiments, the common support element of the pallet 1 comprises at least two sloping walls which meet at a contact point or contact surface which is intended to rest on the substrate. Preferably, the common support element is V-shaped or U-shaped. The enclosed angle of the support element situated between width sides of neighbouring loading panels is preferably equal to or greater than the enclosed angle of the sloping walls of the support elements on the outermost width sides of the pallet.

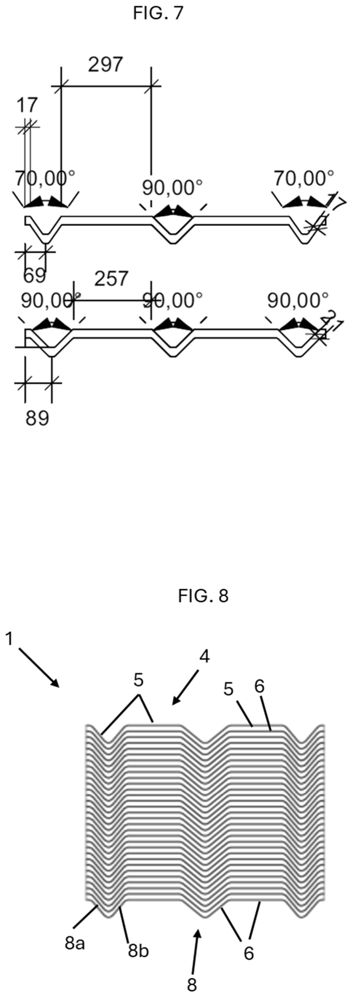

**Figure 7** illustrates two embodiments in which the angles are different and the same respectively. The sloping walls 8a and 8b of the support elements 8 at the outermost sides preferably enclose an angle between 40 and 120 degrees, between 45 and 110 degrees, between 50 and 100 degrees, between 55 and 90 degrees, between 60 and 80 degrees, between 65 and 75 degrees, or preferably around 70 degrees. The sloping walls 8a and 8b of the common support elements 8 between two loading panels 4 preferably enclose an angle between 40 and 120 degrees, between 50 and 115 degrees, between 60 and 110 degrees, between 70 and 105 degrees, between 80 and 100 degrees, between 85 and 95 degrees, or preferably around 90 degrees.

The inventors have found that this shape of support elements and these angles, or combination of angles, offer the best stiffness. The choice of angles also offers the most suitable space for introducing conventional manual pallet trolleys or forklifts below the loading panels. The choice of angles also reduces the normal force on the side concerned and reduces the lever arm on the sloping side. The force of the load exerted on the end of the pallet is also less since, viewed as a whole, a larger area is available over which the force of the load is distributed.

The height H of the support elements of the pallet may vary. The height H of the support element 8 can be determined by the vertical distance of the bottom surface 6 of the loading panel 4 to the contact point 9 of the support element 8. In some embodiments, the height of the support elements at the outermost width sides of the pallet is the same. In the case that the pallet comprises two or more loading panels, the common support element between the width sides of neighbouring panels may have a smaller height than the support elements on the outermost width sides of the pallet. The height of the support element is preferably at least 60 mm, at least 65 mm, at least 70 mm, at least 75 mm, at least 80 mm, at least 85 mm, at least 90 mm, at least 95mm, or at least 100 mm. In a preferred embodiment, the height of at least the support elements on the outermost width sides of the pallet is at least 90 mm. An advantage of this is that such support elements offer sufficient space for easy access with lifting trucks and transpallets, whereby not only is the efficiency of relocation and loading of the pallets increased, but also the risk of damage to both load and pallet is reduced. A secondary advantage is that with such height of the support element, more pallets can be made from the same quantity of material. By reducing the total height of the pallet, a larger number of pallets can be produced from a block of raw material with the same dimensions. This results in a more efficient use of materials, which contributes to both cost reduction and optimisation of the production process.

The length of the support elements is substantially determined by the length of the width side of the loading panel. The support elements of the pallet are provided on the width sides of the loading panel and extend over a part of the width side of the loading panel. In some preferred embodiments, the support element extends over the complete length of the width side of the loading panel. Typically, the length of the width side of the loading panel and hence also of the support elements is 1000 mm. An advantage of this long support element is improved stability and an even weight distribution, whereby a greater load capacity is possible. Such a long support element also increases the general durability of the pallet.

In some embodiments, such as that shown in **figure 8****,** the loading panel 4 has (approximately) the same dimensions on the bottom surface as on the top surface. Thus the width sides of the loading panel 4 on the bottom surface 6 and the top surface 5 are preferably (approximately) the same. The length sides of the loading panel 4 on the bottom surface 6 and the top surface 5 are preferably (approximately) the same. An advantage of this is that when stacking the pallets on one another, the bottom surface 6 and the top surface 5 of the loading panels 4 of neighbouring pallets lie against one another, whereby they can be stacked in compact fashion, which means that they take up less space both during transport and during storage. In some embodiments, such as that shown in **figure 8****,** the support element 8 has (approximately) the same dimensions on the bottom surface 6 as on the top surface 5. Thus the enclosed angle of the sloping walls 8a and 8b of the support elements 8 at the top surface 5 is preferably (approximately) equal to the enclosed angle of the sloping walls 8a and 8b of the support elements 8 at the bottom surface 6 of the support element 8. An advantage of this is that when stacking the pallets on one another, the bottom surface and the top surface of the sloping walls of the support elements of neighbouring pallets lie against one another, whereby the pallets can be stacked in compact fashion, which means that they take up less space both during transport and during storage.

In some embodiments, two or more pallets have a complementary geometry, so that when the pallets are stacked on one another, the top side of a pallet lying underneath adjoins the underside of a pallet placed on top. In certain embodiments, adjacent pallets lie mutually against one another when they are in the stacked state. In some embodiments, the top side of a pallet lies against the underside of the pallet placed on top over the complete length sides and width sides, whereby a continuous contact and support surface is formed.

An important advantage of the design in which the pallets fit into one another is the optimisation of the production and storage process. This offers several advantages: firstly, the cutting waste is minimised because when cutting the pallet, no surplus material need be discarded. Secondly, the number of cutting rows is reduced, since cutting the bottom surface also directly processes the top surface of the underlying panel. In addition, the necessary storage area when not in use is substantially reduced by the compact stacking of the pallets. Finally, the number of pallets that can be stored in the internal store of the machine is maximised, which ensures a more efficient feed for stacking of end products such as EPS panels.

In some embodiments, the pallet is made of expanded polystyrene with a density of at least 15kg/m³, at least 16 kg/m³, at least 17 kg/m³, at least 18 kg/m³, at least 19 kg/m³, at least 20 kg/m³, at least 21 kg/m³, at least 22 kg/m³, at least 23 kg/m³, at least 24 kg/m³, at least 25 kg/m³. In some embodiments, the pallet is made of expanded polystyrene with a density between 15kg/m³ and 40 kg/m³, between 16kg/m³ and 39kg/m³, between 17kg/m³ and 38kg/m³, between 18kg/m³ and 37kg/m³, between 19kg/m³ and 36kg/m³, between 20kg/m³ and 35kg/m³, between 21kg/m³ and 34kg/m³, between 22kg/m³ and 33kg/m³, between 23kg/m³ and 32kg/m³, between 24kg/m³ and 31kg/m³, between 25kg/m³ and 30kg/m³. An advantage of such density is that the pallet can carry a heavier load without the thickness of the loading panels needing to be increased.

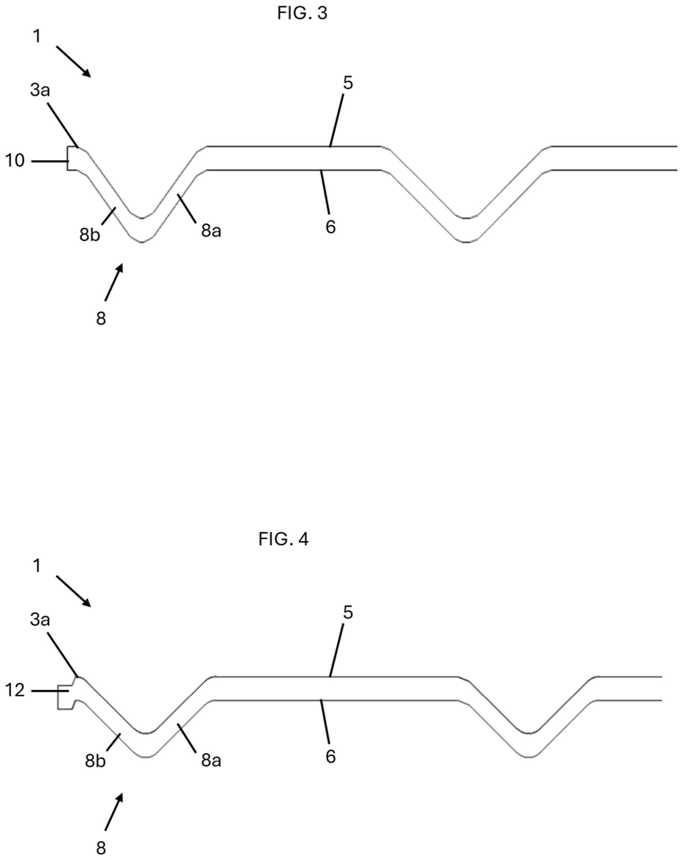

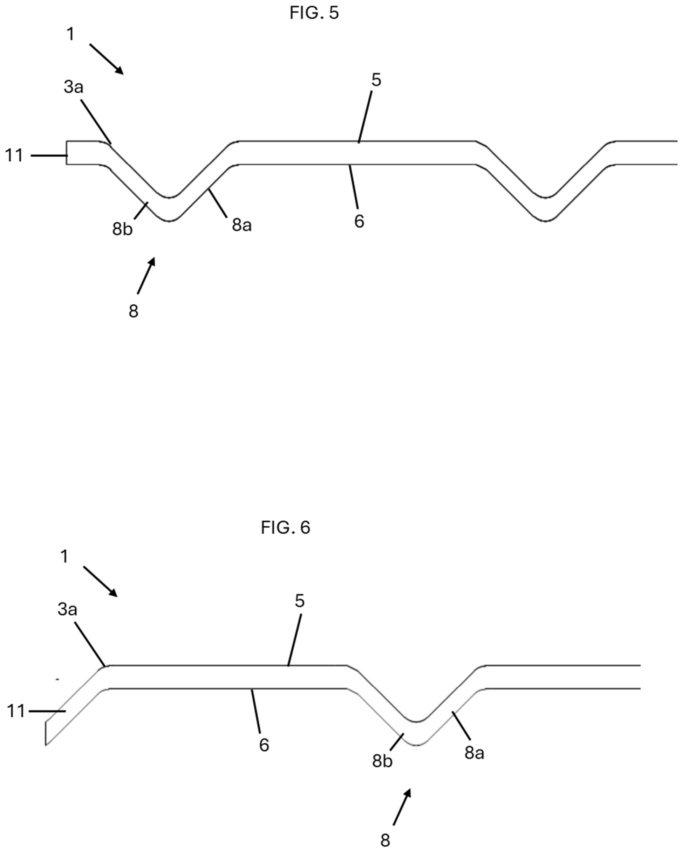

The outermost width sides 3a and 3b of the pallet 1 may be designed in various ways as shown in **figures 3, 4****,** **5** or **6****.** Thus one of the two outermost width sides 3a and 3b of the pallet 1 may be provided with a flat edge 10 which extends at least over a part of the outermost width side(s) of the pallet. In a preferred embodiment, the flat edge 10 extends over the complete length of the outermost width side(s) 3a and 3b of the pallet 1. Alternatively, one of the two outermost width sides 3a and 3b of the pallet 1 may be provided with a hook 12 which points towards the side of the bottom surface or the top surface of the loading panel. In another alternative embodiment, one of the two outermost width sides of the pallet may be provided with a spur 11 which is parallel or directed downward on the same side of the pallet as the support elements. An advantage of this is that when fitting a stretch film, this adheres better to the pallet, which reduces the chance of load displacement during transport.

In a preferred embodiment, the spur 11 is parallel to the loading panel 4, preferably the spur is horizontal. An advantage of this is that such edges and spurs allow more margin for error during cutting, whereby the chance of shaping faults at the ends of the pallets is reduced. Preferably, the spur 11 extends, in the length direction of the pallet, past the outermost width sides 3a and 3b by a length of at least 0.5 cm, at least 1.0 cm, at least 1.5 cm, at least 2.0 cm, at least 2.5 cm, or at least 3.0 cm.

In a second aspect, the invention concerns a method for manufacturing a pallet as described herein. The method preferably comprises at least the following steps:
a) provision of expanded polystyrene, preferably a solid block of expanded polystyrene; and
b) cutting out of one or more pallets using a cutting tool.

This has the advantage that the cutting waste is minimised because, on cutting of the pallets, no surplus material between neighbouring pallets must be removed.

Preferably, the expanded polystyrene is provided as a solid block of expanded polystyrene, for example a solid rectangular block of expanded polystyrene.

In some embodiments, step b) is carried out by means of one glow wire or at least two glow wires which are parallel to one another. Preferably, step b) is carried out by means of at least 11, at least 21, at least 31, at least 41 or at least 51 glow wires which are parallel to one another, so that several pallets can be manufactured in one movement through the expanded polystyrene. The use of multiple glow wires offers the advantage that different cuts can be made simultaneously, which increases the production capacity and shortens the processing time. Thanks to the glow wires, the cuts are made with precision and neatness, which improves the quality of the produced pallets. Yet another advantage is that in some embodiments, the bottom surface and the top surface of neighbouring pallets can be cut simultaneously by one glow wire. This reduces the number of glow wires.

In some embodiments, step b) is carried out by moving one glow wire or at least two (preferably parallel) glow wires in the length direction through the expanded polystyrene. During the movement of the glow wires in the length direction through the expanded polystyrene, the glow wires can also move in height in order to cut out the desired shape of the pallet in one (continuous) cutting movement. This leads to a substantial shortening of the cutting time and increases the production capacity. During cutting of the expanded polystyrene, the glow wires can also vibrate. A vibration motor may be provided for vibrating the glow wires. Preferably, each glow wire is provided with a vibration motor. This ensures an efficient and precise cut, which contributes to the quality of the end product.

In some embodiments, the method also comprises step c) cutting of the length sides to the desired width of the one or more pallets. In some embodiments, the method furthermore comprises step d) cutting of the width sides to the desired length of the one or more pallets. In some embodiments, step d) is carried out by one glow wire. Preferably, one glow wire which is perpendicular to the outermost width sides of the pallets or the block of expanded polystyrene, for example a vertical glow wire. Steps c) and d) are preferably carried out after step b). The order of the steps c) and d) is not crucial for the invention. Thus it is possible that after step b), firstly step c) and then step d) take place, or vice versa. Preferably, during steps c) and/or d), the glow wire or glow wires are moved through the expanded polystyrene.

In some embodiments, during cutting out of the pallets, the glow wires have a temperature of at least 150 °C and 300 °C.

In one embodiment, the glow wire, which is preferably made of an alloy, for example nickel chromium, is heated by means of electric current. This glow wire is then guided through the EPS block, wherein the EPS material melts and vaporises along the cutting line. This has the result that a smoother, more precise cut can be achieved than with mechanical cutting. In an embodiment, the wire is kept taut in order to ensure that the cut is even and the wire slides through the material without bending or losing its shape.

The temperature of the glow wire may vary depending on the density and thickness of the EPS material to be cut. In some embodiments, during cutting out of the pallets, the glow wires have a temperature of at least 150°C and at most 300°C. For thinner pallets with a low density, the temperature of the glow wire is preferably kept within the range of 150°C to 200°C. This prevents excessive heating or carbonisation of the material, which could have undesired effects on the precision and quality of the cut. For thicker pallets or materials with a higher density, preferably a temperature of 200°C to 300°C is used. A higher temperature ensures that the wire melts the denser material more easily, without unnecessary pressure being exerted on the EPS to be cut.

In some embodiments, the method is carried out on a production line. The production line preferably comprises multiple cutting stations, for example three cutting stations. According to a third aspect, the invention comprises a production line configured to perform the method according to the second aspect. (Preferred) embodiments of the first or second aspect of the invention are also (preferred) embodiments of the third aspect of the invention and vice versa.

A first cutting station preferably comprises a frame with glow wires. This cutting station cuts the shape of the pallets. The frame can move in different directions while a block of expanded polystyrene remains stationary, for example on a belt. The glow wires are preferably automatically (in batches) attached to the frame, inactive glow wires are preferably situated at the top in a zone which protrudes above the block of expanded polystyrene. In some embodiments, the glow wires are fixedly mounted on the frame. In some embodiments, the glow wires are mounted on the frame in vibrating fashion, for example by means of a vibration motor. This gives a greater precision.

A second cutting station also preferably comprises a frame with glow wires. This cutting station cuts the pallets to width. Preferably, this frame is stationary. Inactive glow wires are preferably situated at the side, while the active glow wires (e.g. two) are situated in the path of the block of expanded polystyrene and will cut it. The block of expanded polystyrene moves through the glow wires, preferably by movement of the conveyor belt or transport belt.

A third cutting station also comprises at least one glow wire, preferably a frame with glow wires. This cutting station cuts the pallets to length. Preferably, this frame is stationary. In some embodiments, the block of expanded polystyrene is pushed by a concrete plywood plate transversely through a series of glow wires, preferably a series of parallel glow wires which are positioned vertically. The glow wires concerned stand in a good position and thus cut the pallets to length.

## Claims

1. Pallet (1), for carrying a load, formed from expanded polystyrene, comprising:
at least one loading panel (4) with a top loading surface (5), a bottom surface (6) almost parallel to the top surface (5), and at least two mutually opposite width sides (7a, 7b),
wherein each width side (7a, 7b) of the loading panel (4) comprises a support element (8) which protrudes from the top loading surface (5) downward out of the bottom surface (6),
wherein each support element (8) extends over the complete length of the respective width side (7a, 7b) of the loading panel (4), and wherein the support element has at least two sloping walls which meet at a contact surface or contact point.

2. Pallet according to Claim 1, wherein the loading panel has two parallel length sides and two parallel width sides, wherein the width sides are longer than the length sides.

3. Pallet according to Claim 1 or 2, wherein each support element has at least two sloping walls which meet at a contact surface, and wherein the sloping walls enclose an angle between 40 and 120 degrees, preferably between 70 and 90 degrees.

4. Pallet according to any one of Claims 1 to 3, wherein the pallet comprises at least two neighbouring loading panels which are connected to one another at a common width side by means of a common support element.

5. Pallet according to Claim 4, wherein the common support element between two neighbouring loading panels has a smaller height than the support elements at the ends of the pallet.

6. Pallet according to one of Claims 4 to 5, wherein the sloping walls of the support element between two neighbouring loading panels enclose an angle which is greater than the angle enclosed between the sloping walls of the support elements at the ends of the pallet.

7. Pallet according to any one of Claims 1 to 6, wherein at least one of the outermost width sides of the pallet, preferably both outermost width sides, comprises an upright edge which extends at least over a part of at least one of the outermost width sides of the pallet, preferably over the complete length of at least one of the outermost width sides of the pallet.

8. Pallet according to any one of Claims 1 to 7, wherein the pallet is formed from a whole.

9. Pallet according to any one of Claims 1 to 8, wherein the pallet is made from expanded polystyrene with a density of at least 15 kg/m³.

10. Pallet according to any one of Claims 1 to 9, wherein each loading panel has a thickness of at least 15mm.

11. Method for manufacturing a pallet according to any of the preceding claims; the method comprises at least the following steps:
a) provision of expanded polystyrene, preferably a solid block of expanded polystyrene; and
b) cutting out of one or more pallets according to any one of the preceding claims, using a cutting tool.

12. Method according to Claim 11, wherein step b) is carried out by means of at least two glow wires which are parallel to one another.

13. Method according to one of Claims 11 to 12, furthermore comprising:
c) cutting of the length sides to the desired width of the one or more pallets; and/or
d) cutting of the width sides to the desired length of the one or more pallets.
